# FASCICULE DE BREVET EUROPEEN

(11) **EP 4 094 575 B1**
(45) Date de publication et mention de la délivrance du brevet: **10.04.2024**
(21) Numéro de dépôt: 22175382.5
(22) Date de dépôt: 25.05.2022
(51) Int. Cl.: A01K 1/015

(54) **DISPOSITIF DE PAILLAGE AMÉLIORÉ, ET SON INSTALLATION ASSOCIÉE**
VERBESSERTE MULCHVORRICHTUNG UND IHR ENTSPRECHENDER EINBAU
IMPROVED MULCHING DEVICE, AND ITS ASSOCIATED INSTALLATION

(30) Priorité: 28.05.2021 FR 2105621
(43) Date de publication de la demande: 30.11.2022
(73) Titulaire: ALB Innovation, 42600 Montbrison (FR)
(72) Inventeur: VIALLA, Philippe, 42600 CHALAIN LE COMTAL (FR)
(74) Mandataire: Germain Maureau

(56) Documents cités:
- EP-A1- 2 220 931
- EP-A1- 3 598 892
- EP-A2- 0 970 607

## Description

La présente invention concerne le domaine de la distribution automatique de paille dans les élevages d'animaux. Elle concerne plus particulièrement un dispositif de paillage, ainsi qu'une installation de paillage comprenant une pluralité de tels dispositifs. Un tel dispositif de paillage est connu de EP0970607 A2.

Une installation de paillage automatique comprend au moins un conduit de distribution par lequel est acheminé de la paille. La paille peut être broyée et dépoussière avant son entrée dans le conduit de distribution. L'installation de paillage automatique comprend des dispositifs de paillage reliés au conduit de distribution. Les dispositifs de paillage sont agencés sur le conduit de distribution pour réaliser le paillage d'aires, telles que des logettes pour animaux par exemple.

Dans les installations de paillage automatique actuel, la distribution dans le conduit peut être réalisée à l'aide d'un câble à pastilles pour aider à l'acheminement de la paille jusqu'aux dispositifs de paillage.

Ces dispositifs de paillage peuvent être formés par des ajours formés dans le conduit de distribution de sorte que la paille acheminée dans le conduit jusqu'à ces ajours est évacuée du conduit et tombe par gravité dans l'aire située en dessous de ces ajours et s'accumule alors au sol. Bien que cette solution permette une distribution de la paille dans les aires désirées, elle ne permet pas un paillage homogène au sol.

Une autre solution consiste à utiliser un dispositif de paillage comprenant un manchon de régulation de la paille distribuée. Ce manchon de régulation peut par exemple relié à un ajour du conduit de distribution. Le manchon de régulation contrôle alors l'ouverture et la fermeture de l'ajour de sorte que le débit de paillage peut être contrôlé. En début d'un cycle de paillage, le manchon permet une semi-ouverture de l'ajour, seul la paille fine est distribuée. En avançant dans le cycle, le manchon ouvre progressivement l'ajour, la paille épaisse est alors distribuée.

Bien que cette solution permette une distribution de la paille durant tout le cycle de paillage, elle ne permet pas répartition homogène du paillage au sol.

L'invention a pour objectif de proposer un dispositif de paillage amélioré permettant une répartition homogène de la paille au sol.

A cet effet, l'invention a pour objet un dispositif de paillage d'une aire à pailler, le dispositif comprenant :
- un caisson d'accumulation de la paille configuré pour être relié à un conduit de distribution de la paille,
- le caisson comprenant deux volets d'ouverture/fermeture du caisson chacun étant monté en rotation par rapport à un support du caisson,
- les volets formant le fond du caisson et au moins une partie latérale du caisson,
les volets étant prévus pour basculer entre une position de fermeture dans laquelle ils ferment le caisson permettant l'accumulation de la paille dans le caisson et une position d'ouverture dans laquelle ils ouvrent le caisson permettant la libération de la paille contenue dans le caisson et de la déverser dans l'aire ou la logette à pailler.

Il a été constaté que l'utilisation de deux volets pour former le fond du caisson et au moins une partie latérale du caisson montés en rotation améliore sensiblement la répartition de la paille au sol en permettant la distribution de paille fine et épaisse de façon plus homogène. En effet, le déverrouillage de la position de fermeture a pour effet de relâcher les volets qui tombent sous l'action de la gravité et du poids de la paille qu'ils supportent, les volets sont alors entraînés en rotation autour de leur moyen de rotation provoquant l'éclatement du paillage au sol.

On comprendra que le dispositif de paillage permet l'accumulation de paille dans le caisson durant le lancement d'un cycle de paillage pour sa distribution au moment souhaitée par l'ouverture commandée des volets.

Selon un mode de réalisation de l'invention, dans la position d'ouverture les volets sont dos-à-dos l'un par rapport à l'autre.

La course des volets est alors interrompue par leur mise en butée l'un à l'autre où ils se retrouvent dans la position d'ouverture dos-à-dos. Ceci a pour effet de d'améliorer la dispersion plus étendue et plus homogène de la paille au sol.

Selon un mode de réalisation de l'invention, les volets sont montés mobiles en rotation autour d'axe de rotation distincts.

Selon une variante de réalisation, les volets sont montés mobiles en rotation autour d'un même axe de rotation.

Selon un mode de réalisation de l'invention, le support forme un chapeau du caisson, le support et les volets étant configurés pour entourer le conduit de distribution dans une portion de celui-ci comportant au moins un ajour pour recevoir la paille délivrée depuis le conduit de distribution.

Selon un mode de réalisation de l'invention, le support est formé par une tôle pliée.

Selon un mode de réalisation de l'invention, chaque volet est formé par une tôle pliée. Selon un mode de réalisation de l'invention, le dispositif de paillage comprend un dispositif d'actionnement pour contrôler l'ouverture et la fermeture des volets du caisson entre la position de fermeture verrouillée par le dispositif d'actionnement, et la position d'ouverture déverrouillée par le dispositif d'actionnement.

Selon un mode de réalisation de l'invention, le dispositif d'actionnement des volets comprend un câble de commande secondaire dont une première extrémité est fixée à un premier volet par une première attache et une deuxième extrémité est fixée à un deuxième volet par une deuxième attache, et dont une boucle du câble de commande secondaire est formée par une troisième attache reliant le câble de commande secondaire à un câble de commande primaire.

Avantageusement, la première attache et la deuxième attache sont formées par des pions de fixation.

Avantageusement, la troisième attache est formée par un collier de serrage.

Selon un mode de réalisation de l'invention, le câble de commande primaire est commandé par un organe de commande.

Selon un mode de réalisation de l'invention, le support comprend au moins un anneau par lequel passe à la fois le câble de commande primaire et le câble de commande secondaire.

Préférentiellement, le support comprend un premier anneau et un deuxième anneau respectivement en vis-à-vis de la première attache et de la deuxième attache.

Selon un autre aspect, l'invention concerne une installation de paillage comprenant une pluralité de dispositif de paillage tel que défini par la présente invention.

Selon un mode de réalisation du système de paillage, chaque câble de commande secondaire d'un dispositif d'actionnement est relié au câble de commande primaire.

D'autres caractéristiques et avantages de l'invention apparaîtront à la lecture de la description nullement limitative qui suit et des figures annexées qui illustrent de manière schématique plusieurs modes de réalisation.
[Fig. 1] représente une vue schématique d'une installation de paillage d'aires.
[Fig. 2] représente une vue schématique d'un conduit de distribution de paille équipé de dispositifs de paillage selon l'invention.
[Fig. 3] représente une vue schématique d'un conduit de distribution de la paille équipé d'un dispositif de paillage selon l'invention illustré dans une position de fermeture de ses volets.
[Fig. 4] illustre une vue schématique du dispositif de paillage de la figure 3 dans une position d'ouverture de ses volets.
[Fig. 5] représente une vue schématique du dispositif de paillage de la figure 2 et 3, équipé d'un dispositif d'actionnement mécanique.
[Fig. 6] représente une vue schématique de dessous du dispositif de paillage sans les volets.
[Fig. 7] représente une vue schématique d'une attache entre un câble de commande primaire et un câble de commande secondaire du dispositif d'actionnement mécanique.
[Fig. 8] représente une vue schématique illustrant une configuration des câbles de commande de la figure 7 dans un dispositif de paillage.

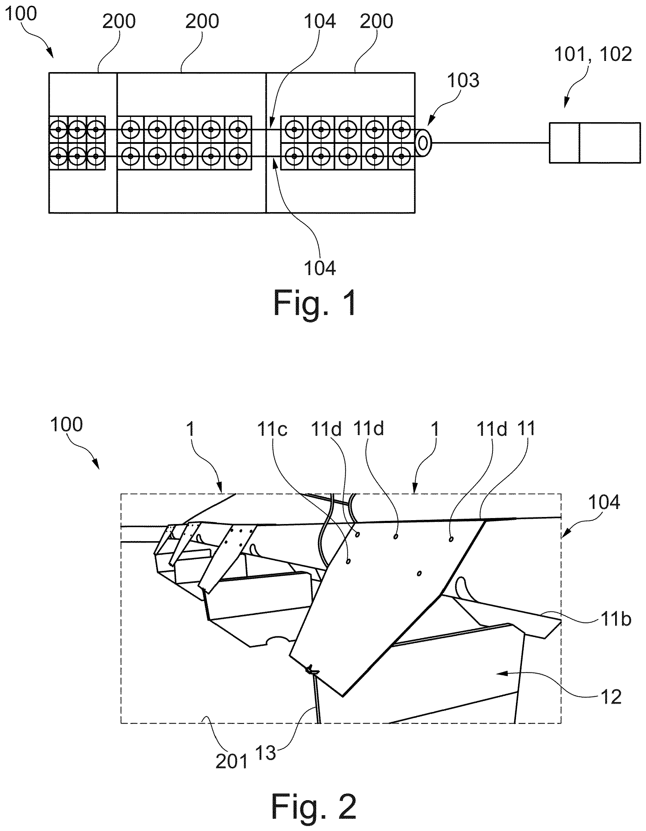

En se référant à la figure 1, on a représenté une installation de paillage 100 automatique comprenant une unité de démêlage 101, une unité de dépoussiérage 102, un séparateur 103 sur lequel sont reliés des conduits 104 de distribution acheminant la paille dans les aires de paillage 200 désirées, telles que des aires paillées ou des logettes 201 pour animaux.

En fonctionnement, des bottes de paille sont chargés dans l'unité de démêlage 101 et la paille démêlée est alors transmise à une unité de dépoussiérage 102 afin de séparer la paille des résidus de poussière qu'elle peut contenir. La paille nettoyée est ensuite convoyée vers un séparateur 103 distribuant la paille dans des conduits 104 de distribution.

A la figure 2, on a représenté un conduit 104 de distribution de la paille équipé de plusieurs dispositifs de paillage 1 pour la fourniture de paille dans des aires 200 ou des logettes 201. Dans le cas illustré, le conduit 104 longe plusieurs logettes 201 à hauteur de tête afin de garantir la distribution de la paille dans chacune des logettes 201 pour laquelle ils sont prévus.

Chaque dispositif de paillage 1 comprend un support 11 de fixation au conduit 104 et deux volets 12, 13 articulés en rotation sur le support 11.

Le support 11 et les volets 12, 13 entoure le conduit 104 de distribution de la paille pour former un caisson d'accumulation de la paille.

Les dispositifs de paillage 1 sont ici représentés dans une position d'ouverture.

Le support 11 d'un dispositif de paillage 1 est plus particulièrement réalisé par une tôle pliée formant un chapeau du caisson, alors que les volets 12, 13 forment un fond et au moins une partie latérale du caisson.

La tôle pliée formant le support 11 de chaque caisson comprend une paroi centrale 11a et deux parois périphériques 11b, 11c séparées par la paroi centrale 11a.

La paroi centrale 11a repose sur le conduit 104 et les deux parois périphériques 11b, 11c sont fixées au conduit 104 de distribution à l'aide d'une série de vis de fixation 11d assurant l'immobilisation du support 11 sur le conduit 104 de distribution.

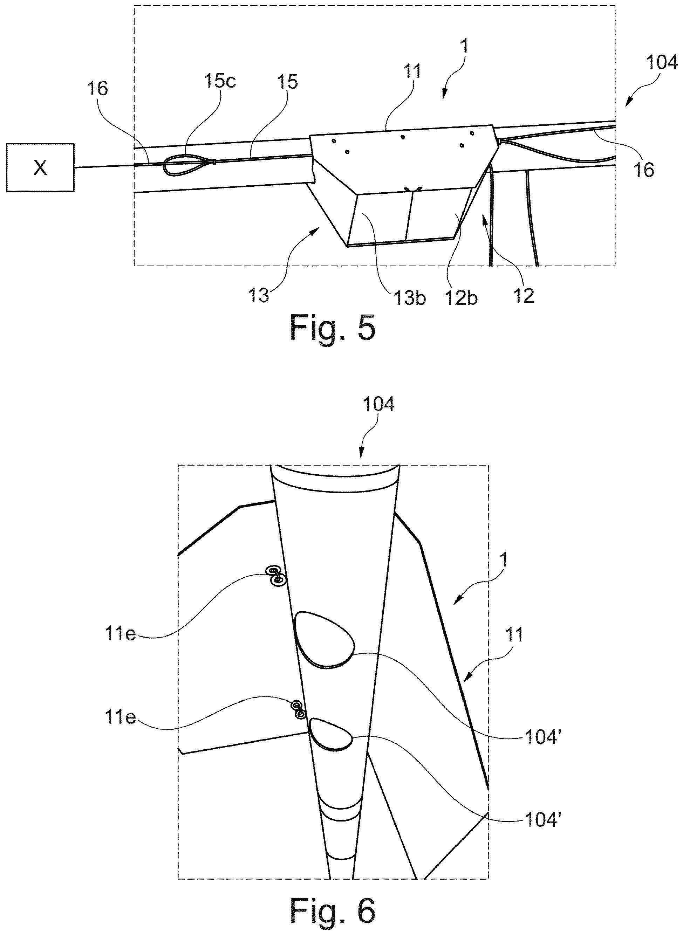

Par ailleurs, la paroi centrale 11a ou une des parois périphériques 11b, 11c d'un support 11 porte des anneaux 11e s'étendant vers l'intérieur du caisson, tel que représenté plus en détail à la figure 6.

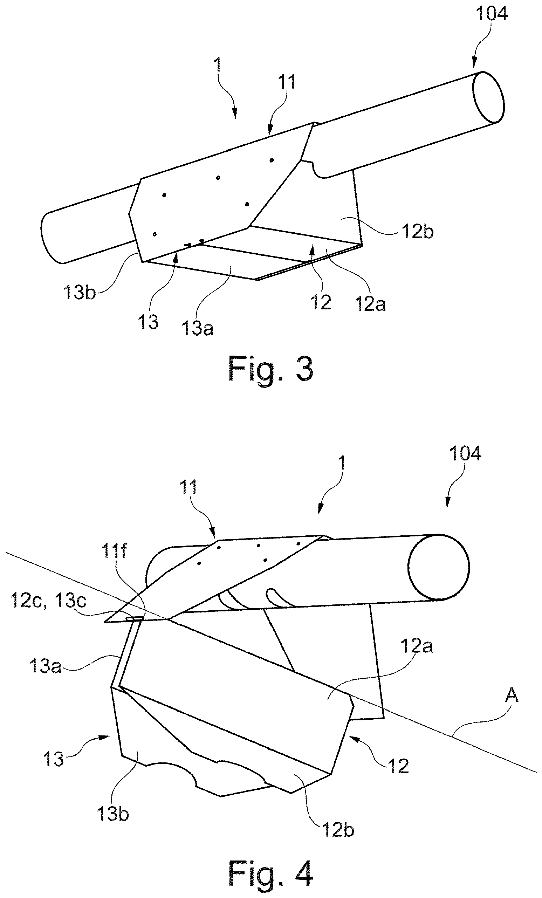

Aux figures 3 et 4, on a représenté un dispositif de paillage 1 tel que décrit équipant un conduit 104 de distribution, où les volets 12, 13 sont montés mobiles en rotation par rapport au support 11 entre une position de fermeture et une position d'ouverture.

A la figure 3, le dispositif est illustré dans une position de fermeture des volets 12, 13 dans laquelle ils ferment le caisson et permettent l'accumulation de la paille dans le caisson.

A la figure 4, le dispositif est illustré dans une position d'ouverture des volets 12, 13 dans laquelle ils ouvrent le caisson et permettant la libération de la paille contenue dans le caisson et de la déverser dans l'aire 200 ou la logette 201 à pailler.

Tel qu'illustré, dans la position d'ouverture les volets 12, 13 sont dos-à-dos l'un par rapport à l'autre pour permettre un meilleur éclatement de la paille au sol lors de leur basculement de la position de fermeture vers la position d'ouverture.

De façon remarquable, chaque volet 12, 13 est formé par une tôle pliée comprenant une paroi de fond 12a, 13a et une paroi latérale 12b, 13b.

La paroi de fond 12a, 13a de chaque volet 12, 13 forme ensemble le fond du caisson dans la position de fermeture de ce dernier, alors que leur paroi latérale 12b, 13b forme une partie latérale du caisson dans cette position.

La paroi de fond 12a, 13a de chaque volet 12, 13 est montée en rotation sur le support 11 du caisson.

Pour assurer la mise en rotation des volets 12, 13 par rapport au support 11, chaque volet 12, 13 comprend des oreilles 12c, 13c prévues pour être mobile en rotation dans des ouvertures 11f du support 11. Tel qu'illustré, ces oreilles 12c, 13c s'étendent depuis chaque côté d'une paroi de fond 12a, 13a.

Il est à noter également deux ajours 104' formé sur le conduit 104 de distribution et mis en correspondance du dispositif de paillage 1 représenté.

On comprendra que chaque dispositif de paillage 1 est prévu pour être monté en correspondance d'au moins un ajour 104' formé dans le conduit 104 sur lequel il est monté.

Le ou les ajours 104' permettent de délivrer la paille depuis le conduit 104 de distribution vers le ou les caissons afin de les remplir.

Aux figure 5 à 8, on a représenté un dispositif d'actionnement 14 pour contrôler l'ouverture et la fermeture des volets 12, 13 du caisson entre la position de fermeture verrouillée par le dispositif d'actionnement 14, et la position d'ouverture déverrouillée par le dispositif d'actionnement 14.

Un câble de commande secondaire 15 est prévu pour relier les volets 12, 13 entre eux. Une première extrémité de ce câble 15 est fixée à un premier volet 12 par une première attache 15a, ici un pion de fixation, et une deuxième extrémité est fixée à un deuxième volet 12, 13 par une deuxième attache 15b, ici un autre pion de fixation, en passant par les deux anneaux 11e que comprend le dispositif de paillage 1.

Par ailleurs, une boucle 15c du câble de commande secondaire 15 est formée par une troisième attache 15d reliant le câble de commande secondaire 15 à un câble de commande primaire 16.

La boucle 15c du câble de commande secondaire 15 permet, d'une part, la fixation du câble de commande secondaire 15 au câble de commande primaire 16 et, d'autre part, la mise en tension des volets 12, 13 dans la position de fermeture.

La troisième attache 15d est avantageusement formée par un collier de sorte que la longueur de la boucle 15c puisse être ajustée.

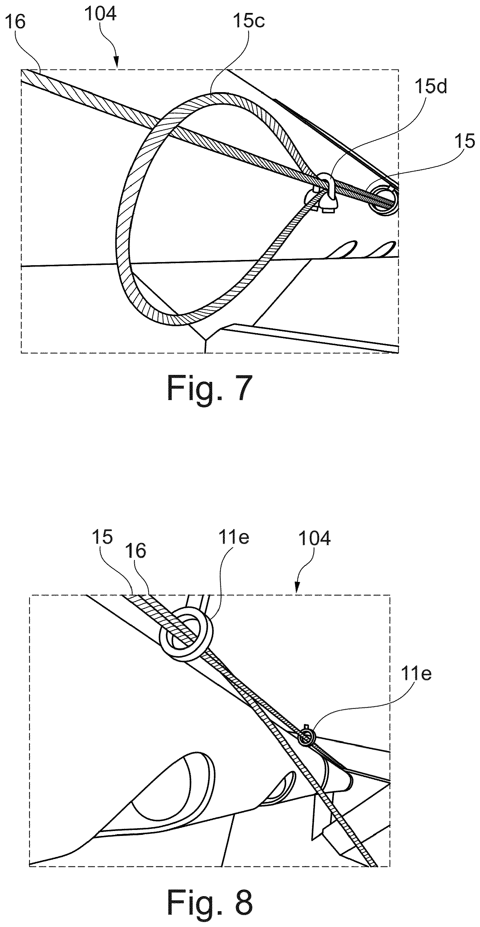

La figure 8 illustre une portion du conduit 104 vue de l'intérieur d'un dispositif de paillage 1 dans laquelle on a représenté uniquement le câble de commande secondaire 15 traversant chaque anneau 11e et dont chaque extrémité est fixée au volet 12, 13 qu'il commande.

Tel que représenté à la figure 5, le câble de commande primaire 16 est commandé par un organe de commande 17, ici un vérin d'actionnement.

On comprendra que dans le cas d'une installation de paillage 100 comprenant une pluralité de dispositif de paillage 1 équipant un conduit 104 de distribution, tel que cela est représenté à la figure 2, chaque dispositif de paillage 1 comprend un câble de commande secondaire 15 individuel, alors qu'un seul câble de commande primaire 16 permet l'actionnement de l'ensemble des dispositifs de paillage 1. Pour cela, le câble de commande secondaire 15 de chaque dispositif de paillage 1 est relié au câble de commande primaire 16 tel que décrit précédemment.

Bien évidemment, l'invention n'est pas limitée aux exemples qui viennent d'être décrits et de nombreux aménagements peuvent être apportés à ces exemples. Notamment, les différentes caractéristiques, formes, variantes et modes de réalisation peuvent être associés les uns avec les autres selon diverses combinaisons dans la mesure où ils ne sont pas incompatibles ou exclusifs les uns des autres. En particulier, toutes les variantes et modes de réalisation décrits précédemment sont combinables entre eux. Le cadre de l'invention est défini par les revendications.

## Revendications

1. Dispositif de paillage (1) d'une aire à pailler, le dispositif (1) comprenant :
un caisson (11, 12, 13) d'accumulation de la paille configuré pour être relié à un conduit de distribution (104) de la paille,
le caisson (11, 12, 13) comprenant deux volets (12, 13) d'ouverture/fermeture du caisson (11, 12, 13) chacun étant monté en rotation par rapport à un support (11) du caisson (11, 12, 13),
les volets (12, 13) formant le fond du caisson (11, 12, 13) et au moins une partie latérale du caisson (11, 12, 13),
les volets (12, 13) étant prévus pour basculer entre une position de fermeture dans laquelle ils ferment le caisson (11, 12, 13) permettant l'accumulation de la paille dans le caisson (11, 12, 13) et une position d'ouverture dans laquelle ils ouvrent le caisson (11, 12, 13) permettant la libération de la paille contenue dans le caisson (11, 12, 13) et de la déverser dans l'aire à pailler.

2. Dispositif de paillage (1) selon la revendication précédente, **caractérisé en ce que**, dans la position d'ouverture, les volets (12, 13) sont dos-à-dos l'un par rapport à l'autre.

3. Dispositif de paillage (1) selon l'une quelconque des revendications précédentes, **caractérisé en ce que** les volets (12, 13) sont montés mobiles en rotation autour d'axe de rotation (A) distincts.

4. Dispositif de paillage (1) selon l'une quelconque des revendications précédentes, **caractérisé en ce que** le support (11) forme un chapeau du caisson (11, 12, 13), le support (11) et les volets (12, 13) étant configurés pour entourer le conduit de distribution (104) dans une portion de celui-ci comportant au moins un ajour (104') pour recevoir la paille délivrée depuis le conduit de distribution (104).

5. Dispositif de paillage (1) selon l'une quelconque des revendications précédentes, **caractérisé en ce que** le support (11) et/ou les volets (12, 13) sont formés par une tôle pliée.

6. Dispositif de paillage (1) selon l'une quelconque des revendications précédentes, **caractérisé en ce qu'**il comprend un dispositif d'actionnement (14) pour contrôler l'ouverture et la fermeture des volets (12, 13) du caisson (11, 12, 13) entre la position de fermeture verrouillée par le dispositif d'actionnement (14), et la position d'ouverture déverrouillée par le dispositif d'actionnement (14).

7. Dispositif de paillage (1) selon la revendication précédente, **caractérisé en ce que** le dispositif d'actionnement (14) des volets (12, 13) comprend un câble de commande secondaire (15) dont une première extrémité est fixée à un premier volet (12) par une première attache (15a) et une deuxième extrémité est fixée à un deuxième volet (13) par une deuxième attache (15b), et dont une boucle (15c) du câble de commande secondaire (15) est formée par une troisième attache (15d) reliant le câble de commande secondaire (15) à un câble de commande primaire (16).

8. Dispositif de paillage (1) selon la revendication précédente, **caractérisé en ce que** le câble de commande primaire (16) est commandé par un organe de commande (17).

9. Dispositif de paillage (1) selon l'une quelconque des revendications 7 ou 8, **caractérisé en ce que** le support (11) comprend au moins un anneau (11e) par lequel passe à la fois le câble de commande primaire (16) et le câble de commande secondaire (15).

10. Installation de paillage comprenant une pluralité de dispositif de paillage (1) selon l'une des revendications précédentes.

## Patentansprüche

1. Vorrichtung zum Mulchen (1) eines zu mulchenden Bereichs, wobei die Vorrichtung (1) umfasst:
einen Kasten (11, 12, 13) zum Sammeln von Stroh, der so konfiguriert ist, dass er mit einer Leitung zum Verteilen (104) des Strohs verbunden werden kann,
wobei der Kasten (11, 12, 13) zwei Klappen (12, 13) zum Öffnen/Schließen des Kastens (11, 12, 13) umfasst, die jeweils in Bezug auf einen Träger (11) des Kastens (11, 12, 13) drehbar angebracht sind,
wobei die Klappen (12, 13) den Boden des Kastens (11, 12, 13) und mindestens einen Seitenteil des Kastens (11, 12, 13) bilden,
wobei die Klappen (12, 13) so vorgesehen sind, dass sie zwischen einer Schließstellung, in der sie den Kasten (11, 12, 13) schließen, was das Sammeln des Strohs im Kasten (11, 12, 13) ermöglicht, und einer Öffnungsstellung schwenken, in der sie den Kasten (11, 12, 13) öffnen, was das Freigeben des im Kasten (11, 12, 13) enthaltenen Strohs und das Abladen in den zu mulchenden Bereich ermöglicht.

2. Mulchvorrichtung (1) nach dem vorstehenden Anspruch, **dadurch gekennzeichnet, dass** sich die Klappen (12, 13) in der Öffnungsstellung Rücken an Rücken zueinander befinden.

3. Mulchvorrichtung (1) nach einem der vorstehenden Ansprüche, **dadurch gekennzeichnet, dass** die Klappen (12, 13) um getrennte Drehachsen (A) drehbeweglich angebracht sind.

4. Mulchvorrichtung (1) nach einem der vorstehenden Ansprüche, **dadurch gekennzeichnet, dass** der Träger (11) eine Haube des Kastens (11, 12, 13) bildet, wobei der Träger (11) und die Klappen (12, 13) so konfiguriert sind, dass sie die Verteilleitung (104) an einem Abschnitt derselben, der mindestens einen Durchbruch (104') zum Aufnehmen des aus der Verteilleitung (104) zugeführten Strohs umfasst, umgeben.

5. Mulchvorrichtung (1) nach einem der vorstehenden Ansprüche, **dadurch gekennzeichnet, dass** der Träger (11) und/oder die Klappen (12, 13) von einem gebogenen Blech gebildet werden.

6. Mulchvorrichtung (1) nach einem der vorstehenden Ansprüche, **dadurch gekennzeichnet, dass** sie eine Betätigungsvorrichtung (14) zum Steuern des Öffnens und des Schließens der Klappen (12, 13) des Kastens (11, 12, 13) zwischen der durch die Betätigungsvorrichtung (14) verriegelten Schließstellung und der durch die Betätigungsvorrichtung (14) entriegelten Öffnungsstellung umfasst.

7. Mulchvorrichtung (1) nach dem vorstehenden Anspruch, **dadurch gekennzeichnet, dass** die Betätigungsvorrichtung (14) der Klappen (12, 13) einen sekundären Seilzug (15) umfasst, von dem ein erstes Ende durch eine erste Klammer (15a) an einer ersten Klappe (12) befestigt ist, und ein zweites Ende durch eine zweite Klammer (15b) an einer zweiten Klappe (13) befestigt ist, und wobei eine Schlaufe (15c) des sekundären Seilzugs (15) durch eine dritte Klammer (15d) gebildet wird, die den sekundären Seilzug (15) mit einem primären Seilzug (16) verbindet.

8. Mulchvorrichtung (1) nach dem vorstehenden Anspruch, **dadurch gekennzeichnet, dass** der primäre Seilzug (16) durch ein Steuerorgan (17) gesteuert wird.

9. Mulchvorrichtung (1) nach einem der Ansprüche 7 oder 8, **dadurch gekennzeichnet, dass** der Träger (11) mindestens einen Ring (11e) umfasst, durch den sowohl der primäre Seilzug (16) als auch der sekundäre Seilzug (15) verlaufen.

10. Mulchanlage, die eine Vielzahl von Mulchvorrichtungen (1) nach einem der vorstehenden Ansprüche umfasst.

## Claims

1. A mulching device (1) for an area to be mulched, the device (1) comprising:
a straw accumulation box (11, 12, 13) configured to be connected to a straw distribution conduit (104),
the box (11, 12, 13) comprising two flaps (12, 13) of opening/closing the box (11, 12, 13) each being rotatably mounted relative to a support (11) of the box (11, 12, 13),
the flaps (12, 13) forming the bottom of the box (11, 12, 13) and at least one lateral part of the box (11, 12, 13),
the flaps (12, 13) being provided to switch between a closing position in which they close the box (11, 12, 13) allowing the accumulation of the straw in the box (11, 12, 13) and an opening in which they open the box (11, 12, 13) allowing the release of the straw contained in the box (11, 12, 13) and dumping it into the area to be mulched.

2. The mulching device (1) according to the preceding claim, **characterized in that**, in the open position, the flaps (12, 13) are back-to-back relative to each other.

3. The mulching device (1) according to any one of the preceding claims, **characterized in that** the flaps (12, 13) are movably mounted in rotation about distinct axes of rotation (A).

4. The mulching device (1) according to any one of the preceding claims, **characterized in that** the support (11) forms a cap of the box (11, 12, 13), the support (11) and the flaps (12, 13) being configured to surround the distribution conduit (104) in a portion thereof including at least one aperture (104') to receive the straw delivered from the distribution conduit (104).

5. The mulching device (1) according to any one of the preceding claims, **characterized in that** the support (11) and/or the flaps (12, 13) are formed by a folded sheet metal.

6. The mulching device (1) according to any one of the preceding claims, **characterized in that** it comprises an actuation device (14) for controlling the opening and closing of the flaps (12, 13) of the box (11, 12, 13) between the closed position locked by the actuation device (14), and the open position unlocked by the actuation device (14).

7. The mulching device (1) according to the preceding claim, **characterized in that** the actuation device (14) of the flaps (12, 13) comprises a secondary control cable (15) whose first end is fixed to a first flap (12) by a first fastener (15a) and a second end is fixed to a second flap (13) by a second fastener (15b), and whose loop (15c) of the secondary control cable (15) is formed by a third clip (15d) connecting the secondary control cable (15) to a primary control cable (16).

8. The mulching device (1) according to the preceding claim, **characterized in that** the primary control cable (16) is controlled by a control member (17).

9. The mulching device (1) according to any one of claims 7 or 8, **characterized in that** the support (11) comprises at least one ring (11e) through which passes both the primary control cable (16) and the secondary control cable (15).

10. A mulching installation comprising a plurality of mulching devices (1) according to any of the preceding claims.
